# EUROPEAN PATENT SPECIFICATION

(11) **EP 1 157 581 B1**
(45) Date of publication and mention of the grant of the patent: **31.05.2006**
(21) Application number: 00917556.3
(22) Date of filing: 09.03.2000
(51) Int. Cl.: H04Q 7/38, H04M 11/04

(54) **A METHOD AND A SYSTEM FOR MONITORING OF ALARM APPLICATIONS IN CELLULAR NETS**
VEEFAHREN UND SYSTEM ZUR WARNUNGSÜBERWACHUNG IN ZELLULAREN NETZEN
PROCEDE ET SYSTEME DE SURVEILLANCE D'APPLICATIONS D'ALARMES DANS DES RESEAUX CELLULAIRES

(30) Priority: 09.03.1999 SE 9900854; 03.05.1999 SE 9901598
(43) Date of publication of application: 28.11.2001
(73) Proprietor: Unwire AB, 171 28 Solna (SE); Vodafone Sverige Aktiebolag, 371 80 Karlskrona (SE)
(72) Inventor: WALLON, Michael, S-192 73 Sollentuna (SE); EKBERG, Gustaf, S-371 30 Karlskrona (SE)
(74) Representative: Sundström, Per Olof
(86) International application number: PCT/SE2000/000472
(87) International publication number: WO 2000/054541

(56) References cited:
- GB-A- 2 322 051
- US-A- 5 027 383
- US-A- 5 517 547

## Description

The present invention relates to a method and to a system for monitoring a communications possibility between a monitoring unit in a cellular radio network, for instance a GSM-network, and a number of mobile units in the network, said mobile units being coupled to respective objects from which it shall be possible to send information to the monitoring unit via the network, in accordance with the preamble of the independent method Claim and in accordance with the preamble of the independent system Claim.

It is well known that a cellular radio network can be used to monitor or watch over an object from a monitoring unit (an alarm centre) included in the network. The object may include an alarm sensor that is activated when the object changes state Alternatively, the object may have the form of report means that functions to deliver information to the monitoring unit via the network at chosen time points.

However, a net cell of a cellular radio network, such as the GSM-network, will sometimes be non-functional, either unintentionally or as planned. Such a case can be seen in prior art documents US 5027383, US 5517547 and GB 2322051.

It has hitherto been difficult to anticipate which mobile units will be affected by a planned interruption of a net cell, or a net cell that malfunctions or is replaced. Consequently, it is therefore desirable that a prediction can be made with respect to associated operational disturbances that concern mobile units, particularly when an operational disturbance means that a mobile unit is unable to perform a monitoring duty.

A list of the monitored objects is established in a monitoring unit/alarm centre on the basis of the mobile units associated with said objects. The mobile units in the list are identified by an identity that corresponds to the identity of a net cell through which said mobile unit is served. The mobile unit detects its related cells from which it hunts a cell which, when found, then becomes its serving cell.

One problem is that when a mobile unit serving cell is not in function and the mobile unit is unable to detect another cell in the network that can be reached by the mobile unit (or which can reach the mobile unit), the mobile unit is no longer able to deliver a message to the monitoring unit and the object is therefore no longer monitored.

The object of the present invention is to provide a solution to this problem.

This object is achieved in accordance with the invention by the method set forth in the accompanying independent method Claim. The object is also achieved with the system according to the accompanying independent system Claim. Further embodiments of the invention will be apparent from the accompanying dependent Claims.

The invention will now be described schematically and by way of example with reference to the accompanying drawing.

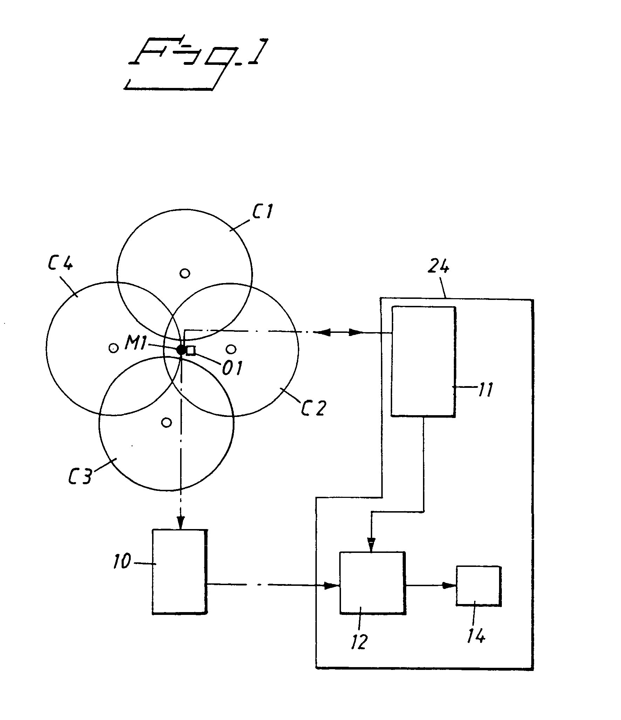

Fig. 1 is a schematic reproduction of an inventive system.

A cellular radio network, for instance a GSM-network, includes a plurality of net cells C1-C4 and a plurality of mobile units, of which one, M1, is shown. A monitoring object 01, for instance a building, a freezer or some other object is provided with a sensor, for instance an alarm, which can be activated, for instance, when detecting that the building has been broken into, or when the temperature of the freezer rises above a set threshold value. The sensor then activates the associated mobile unit M1 and said unit sends to a network-located monitoring unit 24 a message that corresponds to the event in question, via the radio network. The illustrated network includes a plurality of net cells C1-C4, whose covering ranges may overlap in the manner illustrated.

A mobile unit M1 in the network senses or detects the cells C2, C4 with which it is related. The mobile unit chooses one (C2) of the cells as its serving cell in a conventional manner, and also establishes a list of neighbouring cells that it can detect. The transmitted information contains, inter alia, the list of neighbouring cells and data relating to serving cells. The mobile units are given addresses through the identity SCID of their respective serving cells.

The monitoring unit sets up a list 11 of those mobile units to be monitored. The monitoring unit is in communication with net operator supervising centres. The address to these monitored mobile units is given by their respective SCIDs. The remaining net cells (scan cells) scanned or sensed by the mobile unit may also be adjusted or controlled in the list 11, suitably for each monitored mobile unit. The supervising or monitoring centre of the net operator may also include a list 10 that is continually updated with respect to the status of the entire network, including information concerning those net cells that are active, thereby also enabling information to be gained as to which cells may be inoperative at that moment in time. A mobile unit M1 that selects another serving cell C4 because its old serving cell C2 no longer functions for some reason or other is also given another SCID in the list 11 in the monitoring unit. The mobile units are suitably adapted to send information concerning a new cell ID voluntarily in the event of a change, and possibly also information relating to detected responses, or at least to the monitoring unit so as to keep the first list 11 in said unit updated.

To be on the safe side, the monitoring unit 24 may be caused to ask a mobile unit M1 that has been given a new SCID about its status, as there is a risk that the mobile unit may have a problem in contacting its new serving cell C4, for instance when the mobile unit M1 is situated in the border region of the area covered by the new serving cell C4.

The monitoring unit 24 may ask a mobile unit M1 about its status at any time whatsoever, in order to be updated with respect to status.

However, if a monitored mobile unit whose serving cell is no longer in function is not allocated a new SCID for some reason or other, for instance because said mobile unit M1 is not related to any other net cell, i.e. lies outside the area covered by C4 in Fig. 1 and is not related to any other net cell, the monitoring unit SCID for mobile M1 will become invalid or erroneous. Furthermore, the mobile unit M1 will be unable to contact the monitoring unit 24, for instance should an alarm be triggered at the object 01.

The two lists 11 and 10 are compared by a comparator 12, which may be included in the monitoring unit 24, each time a change occurs in the net list 10, and possibly also each time a monitored mobile unit M1 is given a new SCID. Should the list 11 in the monitoring unit include a mobile unit that has an SCID which indicates a cell C2 that according to the net list 10 is out of function, this mobile unit M1 is identified by the comparator 12. Because this mobile unit is unable to reach the monitoring unit via the network at that moment in time, the object concerned cannot be monitored correctly by the monitoring unit 24 via the network.

The monitoring unit 24 is then able to arrange for the object 01 concerned to be monitored in some other way for the time being, for instance through the medium of some other communications equipment 14. For instance, supervising personnel in the area in which the object 01 is situated can be given instructions to go to the site of the object for the purpose of checking said object and possibly report the status to the monitoring unit (or to its personnel). Alternatively, the owner of the object concerned can be told that the object cannot be monitored correctly from the monitoring unit via the network, so that the owner of the object will be able to supervise the object personally.

If the object 01 emits an alarm which is received by the monitoring unit 24, the monitoring unit, or possibly its personnel, can arrange for relevant service personnel, such as police, guards, repairmen or similar personnel, to be sent to the object and there deal with the cause of the alarm. When the object is of the kind that delivers information that shall be received by the monitoring unit, the monitoring unit may include means for recording information and/or forwarding information to a relevant receiver. The mobile unit associated with an object may be adapted to record information from its object, particularly if or when the mobile unit loses contact with the network, so that said information can be delivered later and, for instance, sent to the monitoring unit via the network when said communications possibility has been re-established.

## Claims

1. A method of monitoring a communications possibility between a monitoring unit in a cellular radio network, such as a GSM-network, and a number of mobile units included in said network, said mobile units being coupled to respective monitoring objects from which it shall be possible to deliver information to the monitoring unit via the network, wherein each of the mobile units is adapted to select a serving net cell from among the net cells that can be detected by said unit wherein a first list (11) of the monitored mobile units and their respective serving cell identity is set up in the monitoring unit and wherein the network contains a second list (10) that is updated with respect to the status of all net cells in the whole of the network, **characterised by** comprising the following steps:
- causing a monitored mobile unit that detects at least one net cell in addition to the net cell serving said mobile unit to select a new serving cell and therewith a new serving cell identity in the event of its preceding serving cell being non-functional;
- updating the first list (11) with respect to the serving cell identity of the monitored mobile units;
- coupling the second list (10) set up by the network to the monitoring unit;
- comparing the first list (11) with the second list (10); and
- identifying a mobile unit in the first list that has lost the ability to communicate with the monitoring unit by virtue of its serving cell identity identifying a net cell that is out of function according to the second list.

2. A method according to Claim 1, **characterised by** causing the monitoring unit to voluntarily ask a monitored mobile unit about its status with respect to the identity of serving cells and of the neighbouring cells detected by the mobile unit.

3. A method according to Claim 1 or 2, **characterised by** making said comparison each time the second list is changed.

4. A method according to any one of Claims 1-3, **characterised by** causing the mobile unit to send to an inquiring unit its serving cell identity and a list of the identities of sensed neighbouring cells.

5. A method according to any one of Claims 1-4, **characterised by** making said comparison each time a monitored mobile unit chooses a new serving cell identity.

6. A method according to any one of Claims 1-5, **characterised by** causing a mobile unit that has chosen a new serving cell identity to voluntarily inform at least the monitoring unit of the identity of its new serving cell and of the identity of respective detected neighbouring cells.

7. A method according to any one of claims 1-5, **characterised by** also including the identity of the neighbouring cells of the monitored mobile unit in said first list.

8. A system for monitoring a communications possibility between a monitoring unit in a cellular radio network, such as a GSM-network, and a number of mobile units in said network, such that the mobile units are coupled to respective monitoring objects from which it shall be possible to send information to the monitoring unit via the network, such that each of the mobile units is adapted to choose a serving net cell from among the detected net cells, such that the monitoring unit is arranged to contain a first list (11) of the monitored mobile units and their respective serving cells; and such that the net is adapted to maintain a second list (10) which is kept updated with respect to the status of all net cells in the whole of the network, **characterised in that** :
- a monitored mobile unit is arranged to detect at least one net cell in addition to the net cell serving said mobile unit and is arranged to choose a new serving cell and therewith a new serving cell identity in the event of its preceding serving cell being non-functional;
- there are means to update the first list (11) with respect to the serving cell identity of the monitored mobile unit;
- there are means to connect with the monitoring unit, the second list (10) maintained by the network; and
- the system includes comparator means (12) for comparing the first list (11) with the second list (10), wherein said comparator means (12) is adapted to identify in the first list (11) a mobile unit that has lost its ability to communicate with the monitoring unit in said comparison, by establishing that its serving cell identity relates to a net cell that is no longer functional according to said second list.

9. A system according to Claim 8, **characterised in that** the monitoring unit is adapted to selectively ask a monitored mobile unit about its status with respect to the identity of respective serving cells and of respective detected neighbouring cells.

10. A system according to Claim 8 or 9, **characterised in that** the comparator means (12) is adapted to make said comparison each time the second list (10) is changed.

11. A system according to any one of Claims 8-10, **characterised in that** the mobile unit is adapted to send the identity of its serving cell and of detected neighbouring cells to an inquiring unit.

12. A system according to any one of Claims 8-11, **characterised in that** the comparator means (12) is adapted to make said comparison each time a monitored mobile unit has chosen a new serving cell.

13. A system according to any one of Claims 8-12, **characterised in that** each mobile unit is adapted to voluntarily inform at least the monitoring unit of the identity of a new serving cell and of the identity of detected neighbouring cells, for updating the first list.

14. A system according to any one of Claims 8-13, **characterised in that** the first list also includes the identity of cells that neighbour on the serving cell of the monitored mobile unit.

## Patentansprüche

1. Verfahren zum Überwachen einer Kommunikationsmöglichkeit zwischen einer Überwachungseinheit in einem zellularen Funknetzwerk, wie z.B. einem GSM-Netzwerk, und einer Anzahl mobiler Einheiten, welche in das Netzwerk einbezogen sind, wobei die mobilen Einheiten an jeweilige Überwachungsobjekte gekoppelt sind, von welchen es möglich sein soll, Informationen an die Überwachungseinheit über das Netzwerk zu liefern, wobei jede der mobilen Einheiten angepasst ist, eine Serving Cell des Netzes unter den Netzzellen auszuwählen, die durch die Einheit erfasst werden kann, wobei eine erste Liste (11) der überwachten mobilen Einheiten und ihrer jeweiligen Serving Cell-Identität in der Überwachungseinheit eingerichtet ist, und wobei das Netzwerk eine zweite Liste (10) enthält, die mit Bezug auf den Status aller Netzzellen im ganzen Netzwerk aktualisiert wird,
**dadurch gekennzeichnet, dass** es die folgenden Schritte aufweist:
- Veranlassen einer überwachten mobilen Einheit, die mindestens eine Netzzelle zusätzlich zu der Netzzelle, die der mobilen Einheit dient, erfasst, dass sie eine neue Serving Cell auswählt und damit eine neue Serving Cell-Identität in dem Fall, dass ihre vorhergehende Serving Cell nicht funktionsfähig ist;
- Aktualisieren der ersten Liste (11) mit Bezug auf die Serving Cell-Identität der überwachten mobilen Einheiten;
- Koppeln der zweiten Liste (10), die durch das Netzwerk eingerichtet wurde, an die Überwachungseinheit;
- Vergleichen der ersten Liste (11) mit der zweiten Liste (10); und
- Identifizieren einer mobilen Einheit in der ersten Liste, die die Fähigkeit verloren hat, mit der Überwachungseinheit zu kommunizieren, mittels ihrer Serving Cell-Identität, die eine Netzzelle, die gemäß der zweiten Liste außer Funktion ist, identifiziert.

2. Verfahren nach Anspruch 1, **gekennzeichnet durch** Veranlassen der Überwachungseinheit, eine überwachte mobile Einheit spontan über ihren Status mit Bezug auf die Identität von Serving Cells und Nachbarzellen, die von der mobilen Einheit ermittelt werden, abzufragen.

3. Verfahren nach Anspruch 1 oder 2, **gekennzeichnet durch** Durchführen dieses Vergleichs jedes Mal, wenn die zweite Liste geändert wird.

4. Verfahren nach irgendeinem der Ansprüche 1 bis 3, **gekennzeichnet durch** Veranlassen der mobilen Einheit, ihre Serving Cell-Identität und eine Liste der Identitäten der erfassten Nachbarzellen an eine Abfrageeinheit zu senden.

5. Verfahren nach irgendeinem der Ansprüche 1 bis 4, **gekennzeichnet durch** Durchführen des Vergleichs jedes Mal dann, wenn eine überwachte mobile Einheit eine neue Serving Cell-Identität wählt.

6. Verfahren nach irgendeinem der Ansprüche 1 bis 5, **gekennzeichnet durch** Veranlassen einer mobilen Einheit, die eine neue Serving Cell-Identität gewählt hat, spontan mindestens die Überwachungseinheit über die Identität ihrer neuen Serving Cell und über die Identität der jeweiligen erfassten Nachbarzellen zu informieren.

7. Verfahren nach irgendeinem der Ansprüche 1 bis 5, **gekennzeichnet durch** ebenfalls Einschließen der Identität der Nachbarzellen der überwachten mobilen Einheit in die erste Liste.

8. System zum Überwachen einer Kommunikationsmöglichkeit zwischen einer Überwachungseinheit in einem zellularen Funknetzwerk, wie z.B. einem GSM-Netzwerk, und einer Anzahl von mobilen Einheiten in dem Netzwerk, so dass die mobilen Einheiten an jeweilige Überwachungsobjekte gekoppelt werden, von welchen es möglich sein soll, Informationen über das Netzwerk an die Überwachungseinheit zu senden, so dass jede der mobilen Einheiten angepasst ist, eine Serving Cell des Netzes unter den erfassten Netzzellen so auszuwählen, dass die Überwachungseinheit so angeordnet ist, dass sie eine erste Liste (11) der überwachten mobilen Einheiten und ihrer jeweiligen Serving Cells aufweist, und so, dass das Netz angepasst ist, dass es eine zweite Liste (10) enthält, welche mit Bezug auf den Status aller Netzzellen im gesamten Netzwerk aktualisiert gehalten wird, **dadurch gekennzeichnet dass**
- eine überwachte mobile Einheit angeordnet ist, um mindestens eine Netzzelle zusätzlich zu der Netzzelle, die der mobilen Einheit dient, zu erfassen, und angeordnet ist, um eine neue Serving Cell auszuwählen und damit eine neue Serving Cell-Identität in dem Fall, dass ihre vorhergehende Serving Cell nicht funktionsfähig ist;
- es Mittel zum Aktualisieren der ersten Liste (11) mit Bezug auf die Serving Cell-Identität der überwachten mobilen Einheit gibt;
- es Mittel gibt, um die zweite Liste (10), welche durch das Netzwerk aufrechterhalten wird, mit der Überwachungseinheit zu verbinden; und
- das System ein Komparatormittel (12) zum Vergleichen der ersten Liste (11) mit der zweiten Liste (10) aufweist, wobei das Komparatormittel (12) angepasst ist, in der ersten Liste (11) eine mobile Einheit zu identifizieren, die ihre Fähigkeit verloren hat, mit der Überwachungseinheit bei dem Vergleich zu kommunizieren, durch Feststellen, dass ihre Serving Cell-Identität eine Netzzelle betrifft, die gemäß der zweiten Liste nicht länger funktionsfähig ist.

9. System nach Anspruch 8, **dadurch gekennzeichnet, dass** die , Überwachungseinheit angepasst ist, eine überwachte mobile Einheit selektiv über ihren Status mit Bezug auf die Identität der jeweiligen Serving Cells und der jeweiligen erfassten Nachbarzellen abzufragen.

10. System nach Anspruch 8 oder 9, **dadurch gekennzeichnet, dass** das Komparatormittel (12) angepasst ist, den Vergleich jedes Mal, wenn die zweite Liste (10) geändert wird, durchzuführen.

11. System nach irgendeinem der Ansprüche 8 bis 10, **dadurch gekennzeichnet, dass** die mobile Einheit angepasst ist, die Identität ihrer Serving Cell und erfasster Nachbarzellen an eine Abfrageeinheit zu senden.

12. System nach irgendeinem der Ansprüche 8 bis 11, **dadurch gekennzeichnet, dass** das Komparatormittel (12) angepasst ist, den Vergleich jedes Mal, wenn eine überwachte mobile Einheit eine neue Serving Cell gewählt hat, durchzuführen.

13. System nach irgendeinem der Ansprüche 8 bis 12, **dadurch gekennzeichnet, dass** jede mobile Einheit angepasst ist, spontan mindestens die Überwachungseinheit über die Identität einer neuen Serving Cell und über die Identität erfasster Nachbarzellen zu informieren, um die erste Liste zu aktualisieren.

14. System nach irgendeinem der Ansprüche 8 bis 13, **dadurch gekennzeichnet, dass** die erste Liste auch die Identität der Zellen aufweist, die zu der Serving Cell der überwachten mobilen Einheit benachbart sind.

## Revendications

1. Procédé de surveillance d'une possibilité de communication entre une unité de surveillance dans un réseau radio cellulaire, tel qu'un réseau GSM, et un certain nombre d'unités mobiles comprises dans ledit réseau, lesdites unités mobiles étant couplées à des objets de surveillance respectifs à partir desquelles il doit être possible de délivrer des informations à l'unité de surveillance par l'intermédiaire du réseau, dans lequel chacune des unités mobiles est adaptée pour sélectionner une cellule de réseau de desserte parmi les cellules de réseau qui peuvent être détectées par ladite unité, dans lequel une première liste (11) des unités mobiles surveillées et de leur identité de cellule de desserte respective est dressée dans l'unité de surveillance, et dans lequel le réseau contient une deuxième liste (10) qui est mise à jour quant à l'état de toutes les cellules de réseau dans l'ensemble du réseau, **caractérisé en ce qu'**il comprend les étapes suivantes :
- amener une unité mobile surveillée qui détecte au moins une cellule de réseau en plus de la cellule de réseau desservant ladite unité mobile à sélectionner une nouvelle cellule de desserte et avec celle-ci une nouvelle identité de cellule de desserte dans le cas où sa cellule de desserte précédente serait non fonctionnelle ;
- mettre à jour la première liste (11) quant à l'identité de cellule de desserte des unités mobiles surveillées ;
- coupler la deuxième liste (10) dressée par le réseau à l'unité de surveillance ;
- comparer la première liste (11) avec la deuxième liste (10) ; et
- identifier une unité mobile de la première liste qui a perdu la capacité de communiquer avec l'unité de surveillance du fait que son identité de cellule de desserte identifie une cellule de réseau qui n'est plus en fonction selon la deuxième liste.

2. Procédé selon la revendication 1, **caractérisé par le fait que** l'unité de surveillance est amenée à interroger volontairement une unité mobile surveillée quant à son état en ce qui concerne l'identité de cellules de desserte et des cellules voisines détectées par l'unité mobile.

3. Procédé selon la revendication 1 ou 2, **caractérisé par le fait que** ladite comparaison est effectuée à chaque fois que la deuxième liste est modifiée.

4. Procédé selon l'une quelconque des revendications 1 à 3, **caractérisé par le fait que** l'unité mobile est amenée à envoyer, à une unité qui le demande, son identité de cellule de desserte et une liste des identités de cellules voisines détectées.

5. Procédé selon l'une quelconque des revendications 1 à 4, **caractérisé par le fait que** ladite comparaison est effectuée à chaque fois qu'une unité mobile surveillée choisit une nouvelle identité de cellule de desserte.

6. Procédé selon l'une quelconque des revendications 1 à 5, **caractérisé par le fait qu'**une unité mobile qui a choisi une nouvelle identité de cellule de desserte est amenée à informer volontairement au moins l'unité de surveillance de l'identité de sa nouvelle cellule de desserte et de l'identité de cellules voisines détectées respectives.

7. Procédé selon l'une quelconque des revendications 1 à 5, **caractérisé par le fait que** l'identité des cellules voisines de l'unité mobile surveillée est également incluse dans ladite première liste.

8. Système pour surveiller une possibilité de communication entre une unité de surveillance dans un réseau radio cellulaire, tel qu'un réseau GSM, et un certain nombre d'unités mobiles dans ledit réseau, de sorte les unités mobiles soient couplées à des objets de surveillance respectifs à partir desquelles il doit être possible d'envoyer des informations à l'unité de surveillance par l'intermédiaire du réseau, de sorte que chacune des unités mobiles soit adaptée pour choisir une cellule de réseau de desserte parmi les cellules de réseau détectées, de sorte que l'unité de surveillance soit agencée pour contenir une première liste (11) des unités mobiles surveillées et de leurs cellules de desserte respectives, et de sorte que le réseau soit adapté pour maintenir une deuxième liste (10) qui est maintenue à jour quant à l'état de toutes les cellules de réseau dans l'ensemble du réseau, **caractérisé en ce que** :
- une unité mobile surveillée est agencée pour détecter au moins une cellule de réseau en plus de la cellule de réseau desservant ladite unité mobile et est agencée pour choisir une nouvelle cellule de desserte et avec celle-ci une nouvelle identité de cellule de desserte dans le cas où sa cellule de desserte précédente serait non fonctionnelle ;
- il y a des moyens pour mettre à jour la première liste (11) quant à l'identité de cellule de desserte de l'unité mobile surveillée ;
- il y a des moyens pour coupler l'unité de surveillance à la deuxième liste (10) maintenue par le réseau ; et
- le système comprend des moyens formant comparateur (12) pour comparer la première liste (11) avec la deuxième liste (10), dans lequel lesdits moyens formant comparateur (12) sont adaptés pour identifier dans la première liste (11) une unité mobile qui a perdu sa capacité à communiquer avec l'unité de surveillance dans ladite comparaison, en établissant que son identité de cellule de desserte concerne une cellule de réseau qui n'est plus fonctionnelle selon ladite deuxième liste.

9. Système selon la revendication 8, **caractérisé en ce que** l'unité de surveillance est adaptée pour interroger de manière sélective une unité mobile surveillée quant à son état en ce qui concerne l'identité de cellules de desserte respectives et de cellules voisines détectées respectives.

10. Système selon la revendication 8 ou 9, **caractérisé en ce que** les moyens formant comparateur (12) sont adaptés pour effectuer ladite comparaison à chaque fois que la deuxième liste (10) est modifiée.

11. Système selon l'une quelconque des revendications 8 à 10, **caractérisé en ce que** l'unité mobile est adaptée pour envoyer l'identité de sa cellule de desserte et de cellules voisines détectées à une unité qui le demande.

12. Système selon l'une quelconque des revendications 8 à 11, **caractérisé en ce que** les moyens formant comparateur (12) sont adaptés pour effectuer ladite comparaison à chaque fois qu'une unité mobile surveillée a choisi une nouvelle cellule de desserte.

13. Système selon l'une quelconque des revendications 8 à 12, **caractérisé en ce que** chaque unité mobile est adaptée pour informer volontairement au moins l'unité de surveillance de l'identité d'une nouvelle cellule de desserte et de l'identité de cellules voisines détectées, pour mettre à jour la première liste.

14. Système selon l'une quelconque des revendications 8 à 13, **caractérisé en ce que** la première liste comprend également l'identité de cellules qui sont voisines de la cellule de desserte de l'unité mobile surveillée.
